# EUROPEAN PATENT APPLICATION

(11) **EP 2 133 669 A1**
(43) Date of publication of application: **16.12.2009**
(21) Application number: 09250661.7
(22) Date of filing: 09.03.2009
(51) Int. Cl.: G01F 23/00, H01H 36/02

(54) **Level sensing systems**

(30) Priority: 10.03.2008 GB 0804363
(71) Applicant: GSSC, Inc., Clearwater, FL 33760 (US)
(72) Inventor: Harper, Alan Roger, Cornwall, PL18 9AT (GB)
(74) Representative: Brown, Michael Stanley

(57) **Abstract**

A level sensing system for sensing the level of liquid in a container (19) includes a magnetic member (12) arranged for movement relative to a pneumatic switch (18) operated by the presence or absence of a magnetic field, a spring (13) acting on the magnetic member (12) and urging it towards a first operative position, and a weight (16) suspended from the magnetic member (12), the weight being positioned, in use, within the liquid in the container (19) such that, when the level of liquid in the container (19) falls to a predetermined level, the magnetic member (12) is caused to move from its first operative position (Figure 1) into a second operative position (Figure 2).

## Description

### Field of the Invention

This invention relates to level sensing systems, and has for its object the provision of an improved form of level sensing system that can be used for sensing the level of a liquid, paste or gel in a container. The term "liquid" as used herein is accordingly to be interpreted as including pastes and gels.

In the composites industry, the use of meter mix machines is quite common and there is an increasing requirement for a simple level sensor for providing an indication in the levels of liquid in the catalyst tanks and solvent cleaner tanks of such machines. There is a specific need for providing a warning signal when the liquid levels in such tanks fall to a predetermined low level.

The liquids may be volatile and inflammable and it is a more specific object of the present invention to provide a liquid level sensing system that does not include any electrically operated components.

### Summary of the Invention

According to a first aspect of the present invention there is provided a level sensing system for sensing the level of liquid in a container, the system including a magnetic member arranged for movement relative to a pneumatic switch operated by the presence or absence of a magnetic field, spring means acting on the magnetic member and urging it towards a first operative position, and a weight suspended from the magnetic member, the weight being positioned, in use, within the liquid in the container such that, when the level of liquid in the container falls to a predetermined level, the magnetic member is caused to move from its first operative position into a second operative position.

The weight is preferably connected to the magnetic member by a flexible pipe or tube.

The second operative position of the magnetic member is lower than the first operative position thereof and the arrangement is preferably such that an alarm will be operated pneumatically when the magnetic member moves into its second operative position.

The spring means is preferably a compression spring and the magnetic member and the compression spring are preferably contained in a housing.

An extension rod is preferably provided extending upwardly relative to the magnetic member, the extension rod projecting upwardly from the housing so that it can be depressed manually to move the magnetic member into its second operative position.

According to a second aspect of the present invention there is provided a method of sensing the level of a liquid in a container which includes the use of the sensing system defined above.

### Brief Description of the Drawings

Figure 1 is a schematic view of a device for sensing the level of liquid in a container and for generating a signal when the level of the liquid in the container falls to a predetermined level, and
Figure 2 shows the device of Figure 1 when a signal is generated.

### Description of the Preferred Embodiment

The device shown in the drawings includes a housing 10 in the form of a machined aluminium block with a vertical hole in which a polished stainless steel rod 11 is mounted. A small ring magnet 12 is fixed to the top of the stainless steel rod 11 and the ring magnet 12 is acted on by one end of a lightweight compression spring 13, the other end of which rests upon a p.t.f.e. bush 14 contained within the vertical hole in the aluminium block.

The rod 11 is externally threaded at its lower end and the upper end of a 4 mm. nylon pipe 15 is connected to the lower end of the rod 11. The pipe 15 is cut to a suitable length and a solid machined weight 16 is attached to the lower end of the pipe 15 by means of a push-fit fitting screwed into the upper surface of the weight 16. The weight 16 may be machined from nylon or from some other suitable plastics material. It is solid, as opposed to hollow, and thus not liable to leak.

A pushbutton 17 is positioned on top of the magnet 12 and projects from the housing 10 so that, if desired, the pushbutton 17 can be depressed manually to effect downward movement of the magnet 12 for test purposes, as described below.

The combined weight of the rod 11, the pushbutton 17, the ring magnet 12, the pipe 15 and the weight 16 is sufficient to compress the compression spring 13 when the rod 11 is positioned vertically, as shown.

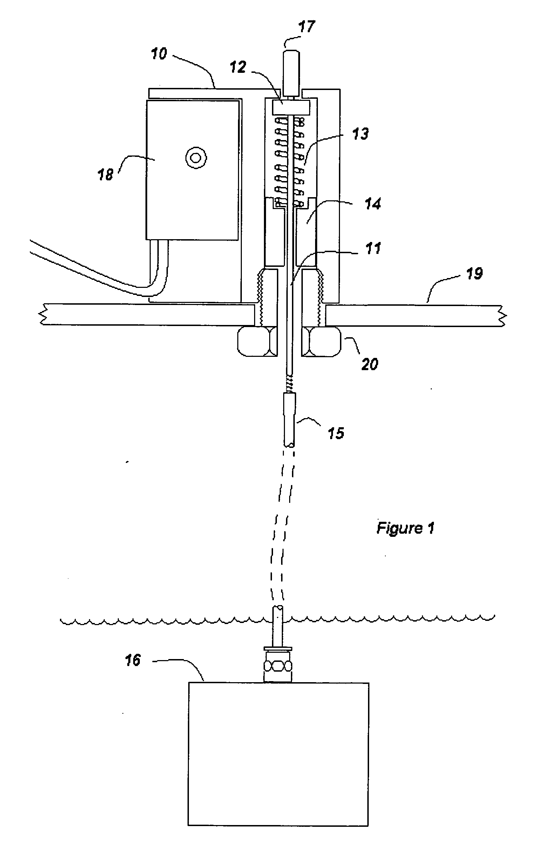

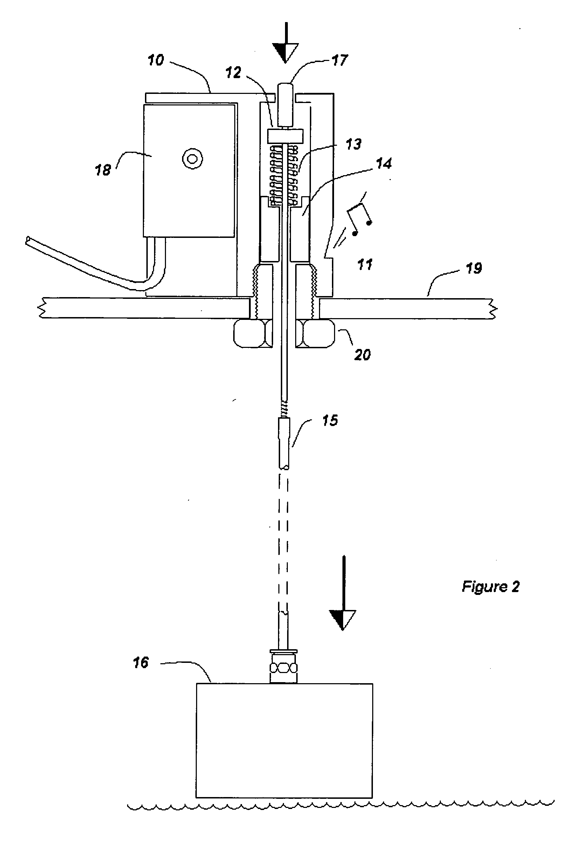

A micro pneumatic switch 18 is mounted in the housing 10 and is responsive to the presence or absence of a magnetic field. It is so positioned that it is operated when the ring magnet 12 moves from the position shown in Figure 1 into the position shown in Figure 2.

The housing 10 can be mounted on top of a liquid container 19 by drilling a hole in the top of the container 19 through which the end of the rod 11 and the pipe 15 can be inserted. A fitting 20 is then screwed from the inside of the container 19 into a threaded bore in the base of the block 10 and the fitting is tightened to clamp the housing 10 securely to the top of the container 19. The weight 16 is positioned within the container 19 and the lower end of the pipe 15 is connected to the weight 16. The length of the flexible pipe 15, which is typically of nylon, is adjusted if necessary so that the weight 16 can be suspended within the container 19 so that it can swing within the container 19 at a predetermined height clear of the base of the container.

With no liquid in the container 19, the weight 16 will be in the position shown in Figure 2 so that, when an air supply is connected to the switch 18, an alarm will operate as the ring magnet 12 is in the lower, alarm-switching position and the compression spring 13 is fully compressed. As the container 19 is filled with liquid, the weight 16 effectively displaces a volume of the liquid and this displacement reduces the load applied by the weight 16 to the lower end of the pipe 15. This reduction in applied load allows the compression spring 13 to uncompress and lift the weight 16, the pipe 15, the rod 11 and the ring magnet 12. Movement of the ring magnet 12 from the position shown in Figure 2 into the position shown in Figure 1 will release the pneumatic switch 18 and the alarm will be turned off.

With the components of the device in the positions shown in Figure 1, the alarm is effectively primed waiting for the liquid level to drop and cause the switch 18 to be operated again.

The pushbutton 17 projects from the top of the housing 10 so that, in the quiescent or non-alarmed condition, the user can simply press down on the pushbutton 17 to effect downward movement of the magnet 12 to operate the alarm so as to be assured that the system is live. When the user releases the pushbutton 17, it will move upwardly under the action of the compression spring 13 and the alarm will be turned off.

The space within the housing 10 permits the provision of an air whistle that is connected internally to the output of the switch 18 and thus provides a built-in audible alarm. The air supply to the switch 18 is connected to the associated machine's air supply so that the switch 18 becomes live whenever the machine is switched on. The switch exhaust may be connected to the internal bore of the vertical hole within which the parts 11 to 14 are mounted to purge the interior of the housing 10 of any dust particles and thus increase the reliability of the device. The output of the switch 18 has sufficient volume to operate a pressure switch or other device in addition to the built-in whistle to provide additional low level signally.

The rod 11 slides relative to the p.t.f.e. bush 14 so that frictional losses are minimised. The device is so designed as to minimise the likelihood of damage as a result of liquid spills or dust and all parts that might be exposed to fumes are chemically resistant and pose no potential spark or other explosion risk.

The shape and size of the displacement weight 16 will depend on the size and/or shape of the container 19 and on the specific gravity of the liquid within the container 19.

## Claims

1. A level sensing system for sensing the level of liquid in a container, the system including a magnetic member arranged for movement relative to a pneumatic switch operated by the presence or absence of a magnetic field, spring means acting on the magnetic member and urging it towards a first operative position, and a weight suspended from the magnetic member, the weight being positioned, in use, within the liquid in the container such that, when the level of liquid in the container falls to a predetermined level, the magnetic member is caused to move from its first operative position into a second operative position.

2. A level sensing system as claimed in Claim 1, in which the weight is connected to the magnetic member by a flexible pipe or tube.

3. A level sensing system as claimed in Claim 1, in which the second operative position of the magnetic member is lower than the first operative position thereof and in which the arrangement is such that an alarm will be operated pneumatically when the magnetic member moves into its second operative position.

4. A level sensing system as claimed in Claim 1, in which the spring means is a compression spring.

5. A level sensing system as claimed in Claim 4, in which the magnetic member and the compression spring are contained in a housing.

6. A level sensing system as claimed in Claim 5, which includes an extension rod extending upwardly relative to the magnetic member, the extension rod projecting upwardly from the housing so that it can be depressed manually to move the magnetic member into its second operative position.

7. A method of sensing the level of a liquid in a container, which includes the use of a sensing system as claimed in Claim 1.
